# EUROPEAN PATENT SPECIFICATION

(11) **EP 3 249 322 B1**
(45) Date of publication and mention of the grant of the patent: **14.09.2022**
(21) Application number: 17170736.7
(22) Date of filing: 12.05.2017
(51) Int. Cl.: F25B 41/34, F25B 41/345

(54) **ELECTRIC EXPANSION VALVE**
ELEKTRISCHES EXPANSIONSVENTIL
SOUPAPE D'EXPANSION ÉLECTRIQUE

(30) Priority: 25.05.2016 JP 2016104209
(43) Date of publication of application: 29.11.2017
(73) Proprietor: Fujikoki Corporation, Tokyo 158-0082 (JP)
(72) Inventor: KAINUMA, Hiroshi, Setagaya-ku, Tokyo 158-0082 (JP); HAYASAKA, Masashi, Setagaya-ku, Tokyo 158-0082 (JP); KOJIMA, Yasushi, Setagaya-ku, Tokyo 158-0082 (JP); AMAIKE, Shotaro, Setagaya-ku, Tokyo 158-0082 (JP)
(74) Representative: Schweiger, Martin

(56) References cited:
- EP-A1- 2 642 223
- JP-A- H10 274 453
- JP-A- H10 299 934
- JP-A- 2005 315 550
- US-A- 4 790 145
- US-B1- 6 233 956
- US-B1- 6 375 086

## Description

### TECHNICAL FIELD

The present invention relates to an expansion valve which is used in a refrigeration cycle of a car air-conditioner, and more particularly to an electric expansion valve to which a pressure sensor is integrally mounted without necessity of change in the existing installation space or piping system.

### BACKGROUND ART

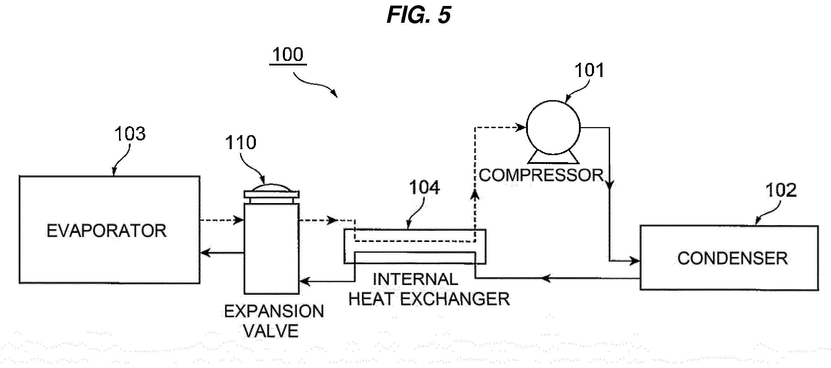

A structure as shown in Fig. 5 has been conventionally provided as a refrigeration cycle of a car air-conditioner. More specifically, a refrigeration cycle 100 of the illustrated example is provided with a compressor 101, a condenser 102, an evaporator 103, an internal heat exchanger 104 and an expansion valve 110, and is structured such as to exchange heat between a cooling medium (a liquid phase) which is conducted from the condenser 102 to the expansion valve 110 and has high temperature and high pressure, and a cooling medium (a gas phase) which is conducted from the evaporator 103 to an intake side of the compressor 101 and has low temperature and low pressure, in the internal heat exchanger 104.

Further, the expansion valve 110 is structured such as to regulate a flow rate (a pressure decreasing degree and a temperature decreasing degree) of the cooling medium which is derived out of a cooling medium outflow port to the evaporator 103, in correspondence to the temperature and the pressure of the low-temperature cooling medium before being exchanged heat by the internal heat exchanger 104.

Further, in a refrigeration cycle which is not provided with the internal heat exchanger 104 shown in Fig. 5, the cooling medium from the condenser 102 (or a receiver arranged in an outlet side of the cooling medium of the condenser) is introduced to the expansion valve 110, and the cooling medium flowing out of the expansion valve 110 is introduced into an attraction port of the compressor 101.

As the expansion valve which is used in the refrigeration cycle 100 mentioned above, there have been already proposed employment of an electric type (electronically controlled type) expansion valve (hereinafter, refer to as an electric expansion valve) using an electric actuator having an electric motor as a primary part or an electromagnetic motor having a solenoid as a primary part, as a valve body drive source which moves up and down a valve body in an opening and closing direction of a valve port, the valve body opening and closing the valve port which is provided between a cooling medium inflow port and a cooling medium outflow port (refer, for example, to the following patent document 1).

The electric expansion valve mentioned above is controlled, for example, in such a manner as to detect temperature and pressure of the low-temperature cooling medium derived from the evaporator 103 by a temperature sensor and a pressure sensor, generate a control signal for regulating an opening degree of the electric expansion valve on the basis of information of the detected temperature and pressure in a control unit having a microcomputer built-in, and supply the control signal to the electric motor or the solenoid. As a result, the valve body moves up and down and the valve opening degree is regulated. Then, the flow rate of the cooling medium derived from the cooling medium outflow port to the evaporator 103 is controlled.

### CITATION LIST

### PATENT DOCUMENT

Patent Document 1: Japanese Unexamined Patent Publication No. 2013-145089
JP2005315550A discloses a refrigerant flow rate control device for an air conditioning system. The flow rate control device includes a valve for variably controlling a flow rate of a refrigerant. The valve is driven by a stepping motor, which is activated by an electric signal from an electronic control unit. A pressure sensor and a temperature sensor are respectively wired to the electronic control unit through piping inside a housing. Both the sensors are housed and integrated in the housing.

Document US 6 233 956 B1 shows an electric expansion valve according to the preamble of claim 1.

### SUMMARY OF THE INVENTION

### PROBLEM TO BE SOLVED BY THE INVENTION

In the case that the electric expansion valve is employed as described above, it is necessary to detect the pressure of the low-temperature cooling medium derived from the evaporator by the pressure sensor. However, since the valve body drive source is arranged diagonally upward in the lower front surface side of the valve main body in the electric expansion valve described in the patent document 1 mentioned above, a space (a mounting surface) for mounting the pressure sensor can not be secured in the valve main body. Further, since a position (a space) for installation of the expansion valve and a piping system are previously defined in the car air-conditioner, there is circumstance that it is hard to make the valve main body larger. As a result, there are a problem that the installation space for separately arranging the pressure sensor is necessary, and a problem that an assembling step is complicated so as to cause a cost increase.

The present invention is made by taking the above circumstance into consideration, and an object of the present invention is to provide an electric expansion valve for a car air-conditioner which can achieve a space saving, an improvement of assembling performance and a reduction of cost.

### MEANS FOR SOLVING PROBLEM

In order to achieve the object mentioned above, an electric drive valve according to the present invention is provided for a car air-conditioner and having a valve main body including a cooling medium inflow port, a cooling medium outflow port, and a valve seat with valve port arranged between the cooling medium inflow port and the cooling medium outflow port and provided with a valve chest, a valve body for opening and closing the valve port, and a valve body drive source for moving the valve body and the valve port in an opening and closing direction, wherein the valve main body is provided with a through passage which has an inflow port for connecting a conduit pipe and an outflow port for connecting the conduit pipe, and a pressure sensor detecting pressure of a cooling medium flowing in the through passage is integrally provided in the valve main body.

According to the invention, the valve body drive source and the pressure sensor are mounted to the same side surface in the valve main body, wherein the valve main body further comprises a communication port that communicates with the valve chest and with the cooling medium inflow port, wherein the communication port has a straight bore with a diameter larger than a bore diameter of the valve port.

According to a further preferable aspect, the side surface is constructed by a flat surface.

According to a furthermore preferable aspect, an installation hole and a fitting insertion hole are formed in the side surface, the installation hole being provided for mounting the valve body drive source and the fitting insertion hole being provided for mounting the pressure sensor, and the installation hole and the fitting insertion hole are open in the same direction.

According to a moreover preferable aspect, the pressure sensor is mounted to an upper side of the valve body drive source.

According to the other preferable aspect, the valve seat is arranged above the cooling medium inflow port.

According to the other preferable aspect, the cooling medium inflow port and the outflow port for connecting the conduit are open to the same side surface in the valve main body.

According to the other preferable aspect, the cooling medium outflow port and the inflow port for connecting the conduit pipe are open to the same side surface in the valve main body.

An electromagnetic actuator having a solenoid as a primary part is preferably used as the valve body drive source.

An electric actuator having an electric motor as a primary part is preferably used as the valve body drive source.

### EFFECT OF THE INVENTION

According to the present invention, the valve main body is provided with the through passage which has the inflow port for connecting the conduit pipe and the outflow port for connecting the conduit pipe, and the pressure sensor detecting pressure of the cooling medium flowing in the through passage is integrally provided in the valve main body. As a result, an installation space for separately arranging the pressure sensor is not necessary, and an assembling step is simplified. Therefore, it is possible to achieve a space saving, an improvement of assembling performance and a cost reduction.

Further, the valve body drive source and the pressure sensor are mounted to the same side surface in the valve main body. As a result, there is an effect that it is possible to further improve a workability, a mounting property (a mounting working property) and a maintenance property of the valve main body.

Further, the valve seat provided in the valve chest is arranged above the cooling medium inflow port. As a result, oil mixed into the cooling medium is not accumulated in (a can of) the valve body drive source. Therefore, it is possible to secure a motion stability, a durability and a reliability.

### BRIEF DESCRIPTION OF DRAWINGS

Fig. 1 is a lower left perspective view showing an embodiment of an electric expansion valve according to the present invention;
Fig. 2 is a left side elevational view of the electric expansion valve shown in Fig. 1;
Fig. 3 is a right side elevational view of the electric expansion valve shown in Fig. 1;
Fig. 4 is a partly broken cross sectional view along an arrow X-X in Fig. 1; and
Fig. 5 is a circuit diagram showing a refrigeration cycle in which an expansion valve of a car air-conditioner is used.

### MODES FOR CARRYING OUT THE INVENTION

A description will be given below of an embodiment according to the present invention with reference to the accompanying drawings.

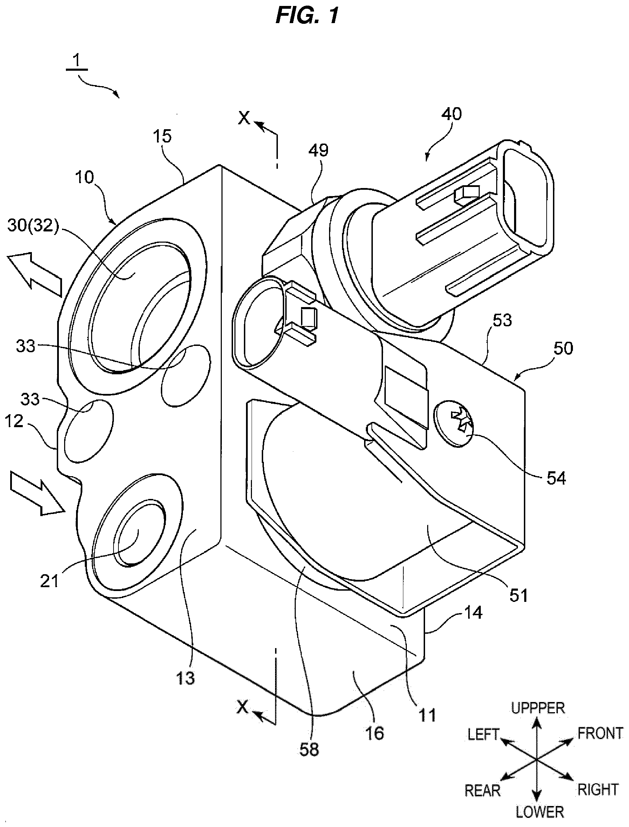

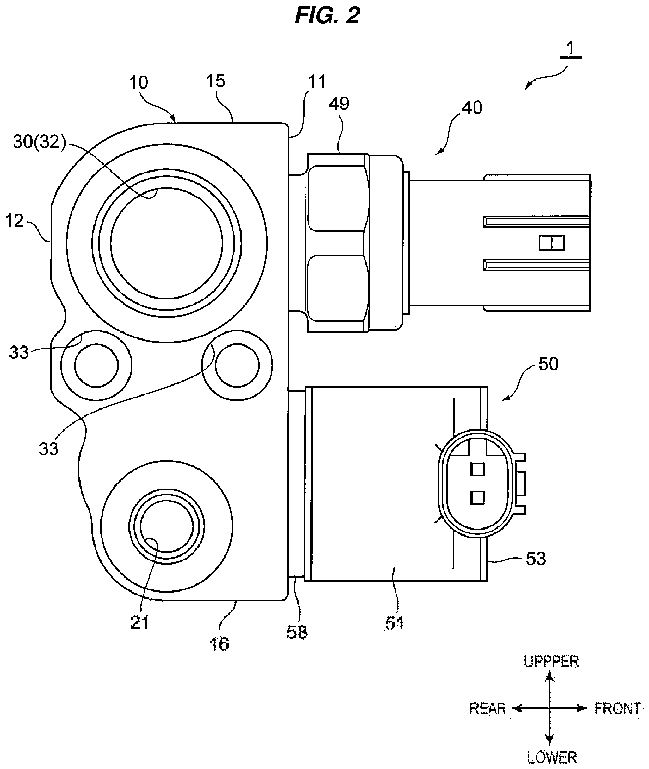

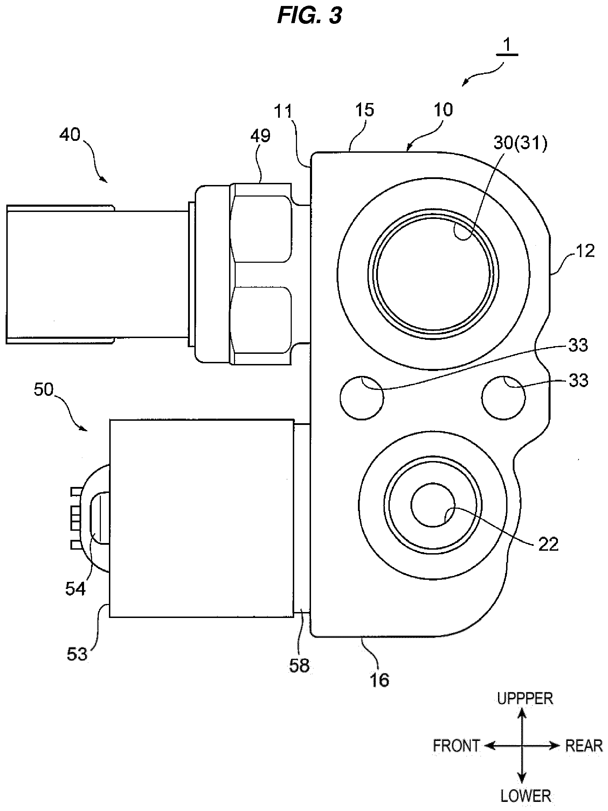

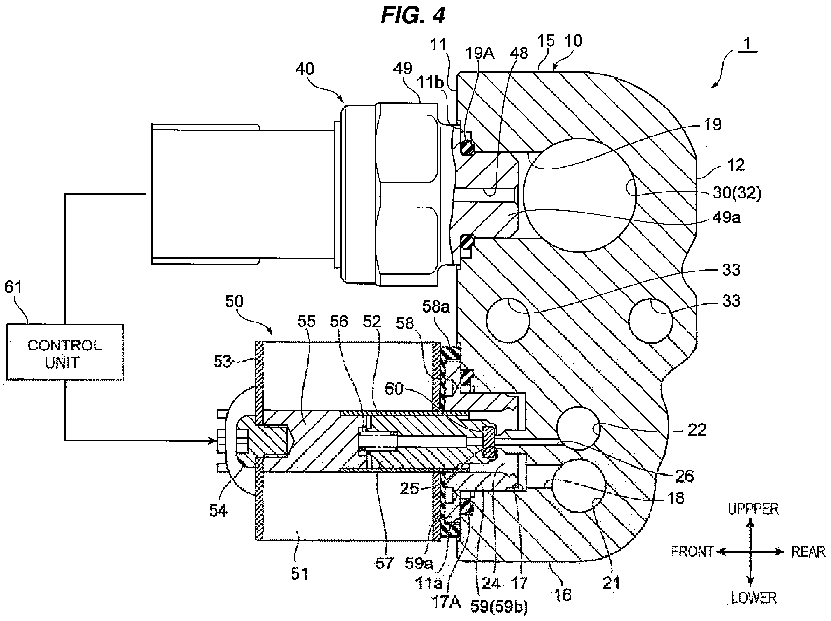

Fig. 1 is a lower left perspective view showing an embodiment of an electric expansion valve according to the present invention, Fig. 2 is a left side elevational view of the same, Fig. 3 is a right side elevational view of the same, and Fig. 4 is a partly broken cross sectional view along an arrow X-X in Fig. 1.

An electric expansion valve 1 according to the illustrated embodiment is used in a refrigeration cycle of a car air-conditioner, and basically has a valve main body 10, a solenoid 50 serving as a valve body drive source, and a pressure sensor 40 for detecting pressure of a low-temperature cooling medium which is derived from an evaporator 103.

Since the pressure sensor 40 is well known its structure, an internal illustration thereof is omitted. The pressure sensor 40 is mounted and fixed to (a fitting insertion hole 19 provided in a front surface 11 of) the valve main body 10 via a step fixed member 49 provided in its center with a pressure introduction hole 48 (refer to Fig. 4) for introducing pressure of the cooling medium (the pressure of the low-temperature cooling medium flowing in a through passage 30 of the valve main body 10) (which is later mentioned in detail).

The solenoid 50 constructing an electromagnetic valve is well known its structure, has a case 52 having an outer periphery in a base end side (a front end side) to which an electromagnetic coil 51 is outward fitted and fixed and constructed by a cylindrical straight pipe, as is well known by referring to Fig. 4, and is structured such that an attraction element 55, a compression coil spring 56 and a plunger 57 are sequentially arranged in series from the base end side.

The base end portion (the front end portion) of the case 52 is sealed and bonded to a collar-shaped portion (an outer peripheral terrace portion) of the attraction element 55 by welding, and the attraction element 55 is fastened and fixed to a cover 53 covering an outer periphery of the electromagnetic coil 51 for energizing and exciting (and formed into an approximately C-shaped form in a plan view) by a bolt 54. A plunger 57 arranged so as to face to the attraction element 55 is basically formed into a columnar shape, and is arranged so as to be slidable in an axial direction (a front-back direction) within the case 52. A portion in an opposite side to the attraction element 55 side of the plunger 57 (a portion protruding out of a leading end opening of the case 52 to a valve chest 24) is formed to be small in diameter, and a discoid valve body 60 opening and closing the valve port 26 while moving close to and away from the valve seat 25 is firmly fixed (fixed by caulking in the illustrated example) to a leading end portion thereof (an end portion in an opposite side to the attraction element 55 side).

A cylindrical connection member 59 with a flange 59a (in other words, constructed by a cylinder portion 59b and the flange portion 59a) is firmly fixed around the case 52 in the cover 53 while having a packing 58 for water prevention and oscillation prevention therebetween. An annular rib 58a brought into contact with (a front surface 11 of) the valve main body 10 is provided in a protruding manner in an outer peripheral portion of the packing 58 (an outside portion of the flange portion 59a of the connection member 59).

The solenoid 50 to which the valve body 60 is mounted is mounted and fixed to (an installation hole 17 provided in the front surface 11 of) the valve main body 10 via the connection member 59 (which is later mentioned in detail).

The valve main body 10 is formed into a modified rectangular parallelepiped shape having a front surface 11 which is constructed by a vertical surface corresponding to a flat surface which is approximately vertical to a horizontal surface in an installed state, a rear surface 12 to which a plurality of concavities and convexities are attached, a left side surface 13 which is constructed by a vertical surface, a right side surface 14 which is constructed by a vertical surface, an upper surface 15 which is constructed by a horizontal surface, and a bottom surface 16 which is constructed by a horizontal surface, and formed by taking into consideration an installation position (space). The rear surface 12 of the valve main body 10 is inclined slightly rearward toward an upward direction (that is, an upper portion of the valve main body 10 is slightly larger rearward in comparison with a lower portion), and a roundness is formed between the rear surface 12 and the upper surface 15 and between the rear surface 12 and the bottom surface 16. The valve main body 10 is formed, for example, by a metal such as aluminum or a resin.

A cooling medium inflow port 21 is open to a position which is slightly closer to a rear side in a lower portion of the left side surface 13, and a cooling medium outflow port 22 is open to a position which is slightly to a rear side of the right side surface 14, in the valve main body 10. The cooling medium inflow port 21 is provided for introducing a high-temperature cooling medium from the internal heat exchanger 104, and the cooling medium outflow port 22 is provided for deriving the cooling medium to the evaporator 103. As seen from a side surface (a lateral direction), the cooling medium outflow port 22 is open to a position which is slightly above the cooling medium inflow port 21, and a bore diameter of the cooling medium outflow port 22 is made smaller than a bore diameter of the cooling medium inflow port 21. Further, a through passage 30 for detection pressure is provided in an upper portion of the valve main body 10, the through passage 30 being constructed by a hole (a through hole) which straightly passes through an inner portion of the valve main body 10 in a lateral direction, and both ends (a right end and a left end) of the through passage are set as an inflow port 31 for connecting a conduit pipe and an outflow port 32 for connecting the conduit pipe. The through passage 30 having the inflow port 31 for connecting the conduit pipe and the outflow port 32 for connecting the conduit pipe constructs a part of a cooling medium flow passage which heads for the internal heat exchanger 104 from the evaporator 103. A passage diameter of the through passage 30 (that is, a bore diameter of the inflow port 31 for connecting the conduit pipe and the outflow port 32 for connecting the conduit pipe) is made larger than the bore diameter of the cooling medium outflow port 22 and the cooling medium inflow port 21. Here, the through passage 30 is formed into a linear shape which extends in the lateral direction, however, may be curved or bent.

Further, bolt holes 33 are formed at side positions side by side in a front-back direction in the vicinity of the vertical center of the valve main body 10 (a portion between the through passage 30 and the cooling medium outflow port 22), the bolt holes 33 inserting bolts (not shown) for fixing the valve main body 10 in the lateral direction. Each of the bolt holes 33 formed toward the lateral direction is formed to be stepped (that is, an inner diameter thereof is changed in its internal portion), and an inner diameter of the left side surface 13 side is enlarged for accommodating a bolt head portion.

Further, as is well known by referring to Fig. 4, an installation surface 11a is formed in a lower portion of the front surface 11 of the valve main body 10 (a front portion of the cooling medium inflow port 21 and the cooling medium outflow port 22) for installing the solenoid 50, the installation surface 11b being constructed by a flat surface which is slightly depressed from the front surface 11. Further, an installation hole 17 is open vertically to the installation surface 11a, in other words, forwardly, the installation hole 17 being constructed by a concave hole to which (the cylinder portion 59a of) the connection member 59 in the solenoid 50 is inserted. A valve seat 25 with a valve port 26 is provided in a protruding manner at the center of a bottom surface (a far side surface) of the installation hole 17, and the valve port 26 is provided straightly to (a far portion of) the cooling medium outflow port 22 rearward in an inner portion of the valve main body 10, and is communicated with the cooling medium outflow port 22. Further, a communication port 18 is formed in a lower side of the valve port 26. The communication port 18 is open in its one end (a front end) to a lower portion of a bottom surface of the installation hole 17 (a lower side of the valve seat 25) and open its other end (a rear end) to (a far portion of) the cooling medium inflow port 21, and straightly penetrates the inner portion of the valve main body 10 in the front-back direction. The cooling medium inflow port 21 and the valve chest 24 defined by the installation hole 17 are communicated by the straight communication port 18. A bore diameter of the communication port 18 is set to be larger than the bore diameter of the valve port 26.

An assembly constructed by the solenoid 50 and the valve body 60 is mounted and fixed to the installation hole 17 forward (in a state in which the axial direction of the solenoid 50 lies sideways) via the connection member 59 and the other appropriate means as occasion demands, the valve body 60 being moved (in the front-back direction) by the solenoid 50 so as to open and close the valve port 26. In the present example, a male thread portion is threadably engaged with a female thread portion which is provided in an inner periphery of the installation hole 17, the male thread portion being provided in an outer periphery of the cylinder portion 59b of the connection member 59 (illustration is omitted), and a packing 17A serving as a seal member is interposed between the installation hole 17 and the connection member 59. As a result, the solenoid 50 is mounted and fixed to the front surface 11 of the valve main body 10 in an airtight manner.

On the other hand, the mounting surface 11b is formed in an upper portion of the front surface 11 of the valve main body 10 (just above the solenoid 50 and in a front side portion of the through passage 30) for mounting the pressure sensor 40, the mounting surface 11b being constructed by a flat surface which is slightly depressed from the front surface 11. Further, the fitting insertion hole 19 is open vertically to the mounting surface 11b, in other words, forwardly, the fitting insertion hole 19 constructed by a through hole into which (a small-diameter fitting portion 49a of) the fixed member 49 in the pressure sensor 40 is inserted. The fitting insertion hole 19 straightly penetrates in the front-back direction in the inner portion of the valve main body 10, and is open its one end (front end) to the mounting surface 11b and open in its other end (rear end) to (a center portion of) the through passage 30.

The pressure sensor 40 is forwardly mounted and fixed to the fitting hole 19 via the fixed member 49 and the other appropriate means as occasion demands. In the present example, a male thread portion is threadably engaged with a female thread portion which is provided in (a front half portion of) the inner periphery of the fitting hole 19, the male thread portion being provided in an outer periphery of the small-diameter fitting portion 49a of the fixed member 49 (illustration is omitted), and an O-ring 19A serving as a seal member is interposed between the fitting hole 19 and the fixed member 49. As a result, the pressure sensor 40 is mounted and fixed to the front surface 11 of the valve main body 10 in an airtight manner.

Under the structure mentioned above, the cooling medium moves according to the following flow. The outlet of the internal heat exchanger 104 (or the outlet of the condenser or the receiver) -> (the far portion of) the cooling medium inflow port 21 -> the communication port 18 -> the valve chest 24 -> the gap formed between the valve body 60 and the valve seat 25 -> the valve port 26 -> (the far portion of) the cooling medium outflow port 22 -> the inlet of the evaporator 103 -> the outlet of the evaporator 103 -> the inflow port 31 for connecting the conduit pipe -> the through passage 30 -> the outflow port 32 for connecting the conduit pipe -> the inlet of the internal heat exchanger 104 (or the attraction port of the compressor).

The electric expansion valve 1 structured as mentioned above is controlled in such a manner as to detect the pressure of the low-temperature cooling medium which is derived from the evaporator 103 to the through passage 30 (that is, the pressure of the low-temperature cooling medium which is conducted from the evaporator 103 to the internal heat exchanger 104) by the pressure sensor 40, generate the control signal for regulating the opening degree of the electric expansion valve 1 on the basis of the information of the detected pressure in a control unit 61 (refer to Fig. 4) which has a microcomputer built-in, and supply the control signal to the solenoid 50. As a result, the valve body 60 provided in (the leading end portion of the plunger 57 of ) the solenoid 50 moves and the valve opening degree is regulated (the valve port 26 is opened and closed). Therefore, the flow rate of the cooling medium derived from the cooling medium outflow port 22 to the evaporator 103 is controlled. The cooling medium flow rate is controlled, for example, by regulating a rate (a duty ratio) for opening and closing the valve port 26.

As mentioned above, the electric expansion valve 1 according to the present embodiment is provided in the valve main body 10 with the through passage 30 which has the inflow port 31 for connecting the conduit pipe and the outflow port 32 for connecting the conduit pipe, and is provided with the pressure sensor 40 which detects the pressure of the cooling medium flowing in the through passage 30, integrally with the valve main body 10 (in the front surface 11 which is one side surface of the valve main body 10). As a result, an installation space for separately arranging the pressure sensor is not necessary, and an assembling step is simplified. Therefore, it is possible to achieve a space saving, an improvement of assembling property and a cost reduction.

Further, since the solenoid 50 serving as the valve body drive source and the pressure sensor are mounted to the same side surface (the front surface 11) in the valve main body 10, there is an effect that it is possible to further improve a workability, a mounting property (a mounting working property) and a maintenance property of the valve main body 10.

Further, the valve seat 25 provided in the valve chest 24 is arranged above the cooling medium inflow port 21. As a result, the oil mixed into the cooling medium is not accumulated in the solenoid 50 serving as the valve body drive source (in a can in the case that the electric motor is used as the valve body drive source). Therefore, it is possible to secure a motion stability, a durability and a reliability.

In the embodiment mentioned above, the electromagnetic type structure (the electromagnetic actuator) having the solenoid 50 as the primary part is employed as the valve body drive source for moving up and down the valve body 60 in the opening and closing direction of the valve port 26, however, whatever structure may be employed as the structure itself. For example, it goes without saying that an electric type structure (an electric actuator) having an electric motor (a stepping motor) as a primary part may be used, the electric type structure having a can which is mounted to the valve main body and being provided with a stator in an outer periphery of the can and provided in an inner portion of the can with a rotor and a screw feed mechanism converting rotation of the rotor into forward and backward movement of the valve body.

### EXPLANATION OF LETTERS OR NUMERALS

- 1: electric expansion valve
- 10: valve main body
- 11: front surface of valve main body
- 11a: installation surface
- 11b: mounting surface
- 17: installation hole
- 18: communication port
- 19: fitting insertion hole
- 21: cooling medium inflow port
- 22: cooling medium outflow port
- 24: valve chest
- 25: valve seat
- 26: valve port
- 30: through passage
- 31: inflow port for connecting conduit pipe
- 32: outflow port for connecting conduit pipe
- 33: bolt hole
- 40: pressure sensor
- 48: pressure introduction hole
- 49: fixed member
- 49a: small-diameter fitting portion
- 50: solenoid
- 59: connection member
- 59a: flange portion
- 59b: cylinder portion
- 60: valve body
- 61: control unit

## Claims

1. An electric expansion valve (1) for a car air-conditioner, the electric drive valve (1) comprising:
a valve main body (10) having a cooling medium inflow port (21), a cooling medium outflow port (22), and a valve seat (25) with a valve port (26) arranged between said cooling medium inflow port (21) and said cooling medium outflow port (22) and provided with a valve chest (24);
a valve body (60) for opening and closing said valve port (26); and
a valve body drive source (50) for moving said valve body (60) and said valve port (26) in an opening and closing direction,
wherein said valve main body (10) is provided with a through passage (30) which has an inflow port (31) for connecting a conduit pipe and an outflow port (32) for connecting the conduit pipe, and a pressure sensor (40) detecting pressure of a cooling medium flowing in said through passage (30) is integrally provided in said valve main body (10), wherein said valve body (60) drive source and said pressure sensor (40) are mounted to a same side of an outer surface (11) of said valve main body (10),
**characterised in that**
the valve main body (10) further comprises a communication port (18) that communicates with the valve chest (24) and with the cooling medium inflow port (21), wherein the communication port (18) has a straight bore with a diameter larger than a bore diameter of the valve port (26).

2. The electric expansion valve (1) according to claim 1, wherein said outer surface (11) is constructed by a flat surface.

3. The electric expansion valve (1) according to claim 1 or 2, wherein an installation hole (17) and a fitting insertion hole (19) are formed in said outer surface (11), the installation hole (17) being provided for mounting said valve body drive source (50) and the fitting insertion hole (19) being provided for mounting said pressure sensor (40), and said installation hole (17) and said fitting insertion hole (19) are open in the same direction.

4. The electric expansion valve (1) according to any one of claims 1 to 3, wherein said pressure sensor (40) is mounted to an upper side of said valve body drive source (50).

5. The electric expansion valve (1) according to any one of claims 1 to 4, wherein said valve seat (25) is arranged above said cooling medium inflow port (21).

6. The electric expansion valve (1) according to any one of claims 1 to 5, wherein said cooling medium inflow port (21) and said outflow port (32) for connecting the conduit are open to the same side of the outer surface (11) in said valve main body (10).

7. The electric expansion valve (1) according to any one of claims 1 to 5, wherein said cooling medium outflow port (22) and said inflow port (31) for connecting the conduit pipe are open to the same side of the outer surface (11) in said valve main body (10).

8. The electric expansion valve (1) according to any one of claims 1 to 8, wherein an electromagnetic actuator having a solenoid as a primary part is used as said valve body drive source (50).

9. The electric expansion valve (1) according to any one of claims 1 to 7, wherein an electric actuator having an electric motor as a primary part is used as said valve body drive source (50).

## Patentansprüche

1. Elektrisches Expansionsventil (1) für eine Autoklimaanlage, wobei das elektrische Antriebsventil (1) aufweist:
einen Ventilhauptkörper (10) mit einer Kühlmedium-Zuflussöffnung (21), einer Kühlmedium-Abflussöffnung (22) und einem Ventilsitz (25) mit einer Ventilöffnung (26), angeordnet zwischen der Kühlmedium-Zuflussöffnung (21) und der Kühlmedium-Abflussöffnung (22) und versehen mit einer Ventilkammer (24);
einen Ventilkörper (60) zum Öffnen und Schließen der Ventilöffnung (26); und
eine Ventilkörper-Antriebsquelle (50) zum Bewegen des Ventilkörpers (60) und der Ventilöffnung (26) in einer Öffnungs- und Schließrichtung,
wobei der Ventilhauptkörper (10) mit einem Durchgangskanal (30) versehen ist, der eine Zuflussöffnung (31) zum Anschließen eines Leitungsrohrs und eine Abflussöffnung (32) zum Anschließen des Leitungsrohrs aufweist, und wobei ein Drucksensor (40), der den Druck eines in dem Durchgangskanal (30) strömenden Kühlmediums erfasst, integral in dem Ventilhauptkörper (10) bereitgestellt ist, wobei die Ventilkörper (60)-Antriebsquelle und der Drucksensor (40) an einer gleichen Seite einer Außenfläche (11) des Ventilhauptkörpers (10) angebracht sind,
**dadurch gekennzeichnet, dass** der Ventilhauptkörper (10) ferner eine Kommunikationsöffnung (18) aufweist, die mit der Ventilkammer (24) und mit der Kühlmedium-Zuflussöffnung (21) in Verbindung steht, wobei die Kommunikationsöffnung (18) eine gerade Bohrung mit einem Durchmesser aufweist, der größer ist als ein Bohrungsdurchmesser der Ventilöffnung (26).

2. Elektrisches Expansionsventil (1) nach Anspruch 1, wobei die Außenfläche (11) durch eine ebene Fläche gebildet wird.

3. Elektrisches Expansionsventil (1) nach Anspruch 1 oder 2, wobei in der Außenfläche (11) ein Installationsloch (17) und ein Anschlussstück-Einsetzloch (19) ausgebildet sind, wobei das Installationsloch (17) für die Montage der Ventilkörper-Antriebsquelle (50) bereitgestellt ist und das Anschlussstück-Einsetzloch (19) für die Montage des Drucksensors (40) bereitgestellt ist, und wobei das Installationsloch (17) und das Anschlussstück-Einsetzloch (19) in derselben Richtung offen sind.

4. Elektrisches Expansionsventil (1) nach einem der Ansprüche 1 bis 3, wobei der Drucksensor (40) an einer Oberseite der Ventilkörper-Antriebsquelle (50) angebracht ist.

5. Elektrisches Expansionsventil (1) nach einem der Ansprüche 1 bis 4, wobei der Ventilsitz (25) oberhalb der Kühlmedium-Zuflussöffnung (21) angeordnet ist.

6. Elektrisches Expansionsventil (1) nach einem der Ansprüche 1 bis 5, wobei die Kühlmedium-Zuflussöffnung (21) und die Abflussöffnung (32) zum Anschließen der Leitung zur gleichen Seite der Außenfläche (11) in dem Ventilhauptkörper (10) offen sind.

7. Elektrisches Expansionsventil (1) nach einem der Ansprüche 1 bis 5, wobei die Kühlmedium-Abflussöffnung (22) und die Zuflussöffnung (31) zum Anschließen des Leitungsrohrs zur gleichen Seite der Außenfläche (11) in dem Ventilhauptkörper (10) offen sind.

8. Elektrisches Expansionsventil (1) nach einem der Ansprüche 1 bis 8, wobei ein elektromagnetischer Aktuator mit einem Solenoid als Primärteil als Ventilkörper-Antriebsquelle (50) verwendet wird.

9. Elektrisches Expansionsventil (1) nach einem der Ansprüche 1 bis 7, wobei ein elektrischer Aktuator mit einem Elektromotor als Primärteil als Ventilkörper-Antriebsquelle (50) verwendet wird.

## Revendications

1. Vanne de détente électrique (1) pour un climatiseur de voiture, la vanne d'entraînement électrique (1) comportant:
un corps principal de vanne (10) ayant un orifice d'entrée d'agent de refroidissement (21), un orifice de sortie d'agent de refroidissement (22), et un siège de vanne (25) avec un orifice de vanne (26) disposé entre ledit orifice d'entrée d'agent de refroidissement (21) et ledit orifice de sortie d'agent de refroidissement (22) et pourvu d'une chambre de vanne (24);
un corps de vanne (60) pour ouvrir et fermer ledit orifice de vanne (26); et
une source d'entraînement de corps de vanne (50) pour déplacer ledit corps de vanne (60) et ledit orifice de vanne (26) dans une direction d'ouverture et de fermeture,
dans laquelle ledit corps principal de vanne (10) est pourvu d'un passage traversant (30) qui a un orifice d'entrée (31) pour connecter un tuyau de conduite et un orifice de sortie (32) pour connecter le tuyau de conduite, et un capteur de pression (40) détectant la pression d'un agent de refroidissement s'écoulant dans ledit passage traversant (30) est intégralement prévu dans ledit corps principal de vanne (10), dans laquelle ladite source d'entraînement de corps de vanne (60) et ledit capteur de pression (40) sont montés sur un même côté d'une surface extérieure (11) dudit corps principal de vanne (10),
**caractérisée en ce que** le corps principal de vanne (10) comporte en outre un orifice de communication (18) qui communique avec la chambre de vanne (24) et avec l'orifice d'entrée d'agent de refroidissement (21), dans laquelle l'orifice de communication (18) a un alésage droit avec un diamètre plus grand qu'un diamètre d'alésage de l'orifice de vanne (26).

2. Vanne de détente électrique (1) selon la revendication 1, dans laquelle ladite surface extérieure (11) est construite par une surface plate.

3. Vanne de détente électrique (1) selon la revendication 1 ou 2, dans laquelle un trou d'installation (17) et un trou d'insertion de raccord (19) sont formés dans ladite surface extérieure (11), le trou d'installation (17) étant prévu pour monter ladite source d'entraînement de corps de vanne (50) et le trou d'insertion de raccord (19) étant prévu pour monter ledit capteur de pression (40), et ledit trou d'installation (17) et ledit trou d'insertion de raccord (19) sont ouverts dans la même direction.

4. Vanne de détente électrique (1) selon l'une quelconque des revendications 1 à 3, dans laquelle ledit capteur de pression (40) est monté sur un côté supérieur de ladite source d'entraînement de corps de vanne (50).

5. Vanne de détente électrique (1) selon l'une quelconque des revendications 1 à 4, dans laquelle ledit siège de vanne (25) est disposé au-dessus dudit orifice d'entrée d'agent de refroidissement (21).

6. Vanne de détente électrique (1) selon l'une quelconque des revendications 1 à 5, dans laquelle ledit orifice d'entrée d'agent de refroidissement (21) et ledit orifice de sortie (32) pour connecter le conduit sont ouverts vers le même côté de la surface extérieure (11) dans ledit corps principal de vanne (10).

7. Vanne de détente électrique (1) selon l'une quelconque des revendications 1 à 5, dans laquelle ledit orifice de sortie d'agent de refroidissement (22) et ledit orifice d'entrée (31) pour connecter le tuyau de conduite sont ouverts vers le même côté de la surface extérieure (11) dans ledit corps principal de vanne (10).

8. Vanne de détente électrique (1) selon l'une quelconque des revendications 1 à 8, dans laquelle un actionneur électromagnétique ayant un solénoïde comme partie principale est utilisé comme ladite source d'entraînement de corps de vanne (50).

9. Vanne de détente électrique (1) selon l'une quelconque des revendications 1 à 7, dans laquelle un actionneur électrique ayant un moteur électrique comme partie principale est utilisé comme ladite source d'entraînement de corps de vanne (50).
